Europäisches Patentamt

European Patent Office

Office européen des brevets

(11) Veröffentlichungsnummer: **0 032 983**
**B1**

## EUROPÄISCHE PATENTSCHRIFT

(45) Veröffentlichungstag der Patentschrift : 22.06.83

(51) Int. Cl.³ : **B 29 F 1/022**

(21) Anmeldenummer : 80107082.2

(22) Anmeldetag : 15.11.80

(54) Spritzgiesswerkzeug mit Hochleistungsangiessbuchse.

(30) Priorität : 23.01.80 DE 3002264

(43) Veröffentlichungstag der Anmeldung :
05.08.81 Patentblatt 81/31

(45) Bekanntmachung des Hinweises auf die Patenterteilung : 22.06.83 Patentblatt 83/25

(84) Benannte Vertragsstaaten :
AT BE CH DE FR GB IT LI LU NL SE

(56) Entgegenhaltungen :
EP A 0 013 118
CH A 514 428
DE A 2 745 146
DE A 2 852 458
JP A 53 072 063
US A 4 184 836

(73) Patentinhaber : Jetform Heisskanalnormalien und Zubehör GmbH
Wefelshohler Strasse 48
D-5880 Lüdenscheid (DE)

(72) Erfinder : Schulte, Wolfgang
Sterbecker Strasse 45
D-5885 Schalksmühle-Heedfeld (DE)
Erfinder : Castiglia, Giacinto
Lindenau 9
D-5880 Lüdenscheid (DE)

(74) Vertreter : Hassler, Werner, Dr.
Postfach 17 04 Asenberg 62
D-5880 Lüdenscheid (DE)

EP 0 032 983 B1

Jouve, 18, rue St-Denis, 75001 Paris, France

## Spritzgießwerkzeug mit Hochleistungsangießbuchse

Die Erfindung betrifft ein Spritzgießwerkzeug mit einer Hochleistungsangießbuchse (11) für eine seitliche Anspritzung durch Tunnelanbindung an eine jede Formkammer (6), wobei die Hochleistungsangießbuchse (11) und die Mündungsflächen von Einspritzkanälen (18) senkrecht zur Teilungsebene des Werkzeugs ausgerichtet sind und wobei ein Schaft (20) der Hochleistungsangießbuchse (11) durch eine Wendelrohrpatrone (21) beheizt ist.

Die US-A-4 184 836 beschreibt ein derartiges Heißkanalspritzgießwerkzeug, bei dem der Schaft der Angießbuchse durch eine Wendelrohrpatrone beheizt ist. Die Einspritzkanäle sind als Rinnen in der Stirnfläche des nicht unmittelbar beheizten Kopfteils ausgebildet. Oberhalb der Stirnfläche des Kopfteils bleibt ein kalottenförmiger Raum frei. Das Material wird im Bereich des Kopfteils jeweils durch das Werkzeug gekühlt, so daß es sich während der Standzeit teilweise verfestigt. Beim nächsten Spritztakt muß das Material wieder aufgeschmolzen werden. Diese Ausbildung bedingt Fließstrukturen in den Erzeugnissen, insbesondere bei dünnwandigen Teilen.

Die DE-A-2 852 458 beschreibt ein Kaltkanalwerkzeug. Dort sind zwischen Angießbuchse und Formwand Nuten zur Verringerung des Wärmeübergangs vorhanden.

Aufgabe der Erfindung ist die Erzielung eines einwandfreien und sauberen Angusses. Während der Taktpausen sollen sich keine störenden Erkaltungsstrukturen in dem Spritzgießwerkstoff bilden. Vor allem sollen keine unsauberen Abrisse der Angießstränge auftreten.

Diese Aufgabe wird nach der Erfindung durch folgende Merkmale gelöst :

a) am Stirnende der Angießbuchse (11) sitzt ein zylindrischer Düsenkopf (16) mit Anspritzkanälen (18), die parallel zur Teilungsebene verlaufen ;

b) das Stirnende der Angießbuchse (11) sowie der Düsenkopf (16) sind mit einer Wendelrohrpatrone (21) bewickelt ;

c) die mit der Wendelrohrpatrone bewickelte Angießbuchse liegt unter Freilassung eines Luftspaltes (27, 28) in einer Aufnahmekammer (8) des Werkzeugs ;

d) der Düsenkopf (16) weist zwischen den Anspritzkanälen (18) am Umfang Ausnehmungen (19) auf, so daß Spalte innerhalb der Aufnahmekammer (8) freibleiben ;

e) die Mündungen der Anspritzkanäle (18) liegen dicht an Einspritzöffnungen (10) der jeweiligen Formkammer (6) an.

Nach der Erfindung wird die gesamte Angießbuchse einschließlich des Kopfteils auf einer hohen Temperatur gehalten, bei der der Thermoplast plastisch bleibt. Es treten infolgedessen keine Erkaltungsstrukturen auf. Bei der Trennung der Werkzeughälften wird der Angußstrang sauber und gratfrei abgetrennt, weil die Mündungsfläche der Einspritzöffnung senkrecht zur Teilungsebene liegt. Außerdem wird das Material innerhalb der Angießbuchse durch die Beheizung und die Wärmeisolation in plastischem Zustand gehalten. Dadurch erfolgt ein sauberes Abscheren des Angußstranges.

Ferner schlägt die Erfindung vor, daß in Längsrichtung des Stirnendes der Angießbuchse ein Kanal für einen Fühler insbesondere einen Temperaturfühler verläuft. Dadurch hat man die Möglichkeit die Temperatur unmittelbar im Bereich des Düsenkopfes zu messen und somit zu steuern oder zu regeln, was erheblich zur Verbesserung der Spritzgießerzeugnisse beiträgt.

Ferner schlägt die Erfindung vor, daß die Kammer zur Aufnahme der Angießbuchse möglichst nah an die Formkammer heranreicht, so daß die Formkammer im Bereich der Einspritzöffnung nur eine sehr dünne Zwischenwand (Wandstärke etwa 0,7 bis 1,5 mm) hat. Dadurch kann man den Angußstrang sehr kurz halten.

Schließlich schlägt die Erfindung vor, daß eine Hülse die Wendelrohrpatrone im Bereich des Düsenkopfes umgibt. Dadurch erfolgt eine Wärmekonzentration auf den Düsenkopf.

Ausführungsformen der Erfindung werden im folgenden unter Bezugnahme auf die anliegenden Zeichnungen erläutert, in denen darstellen :

Figur 1 einen Schnitt durch ein Spritzgießwerkzeug nach der Erfindung,

Figur 2 einen Schnitt nach der Linie II-II in Fig. 1 und

Figur 3 einen der Fig. 1 entsprechenden Schnitt durch eine abgewandelte Ausführungsform der Erfindung.

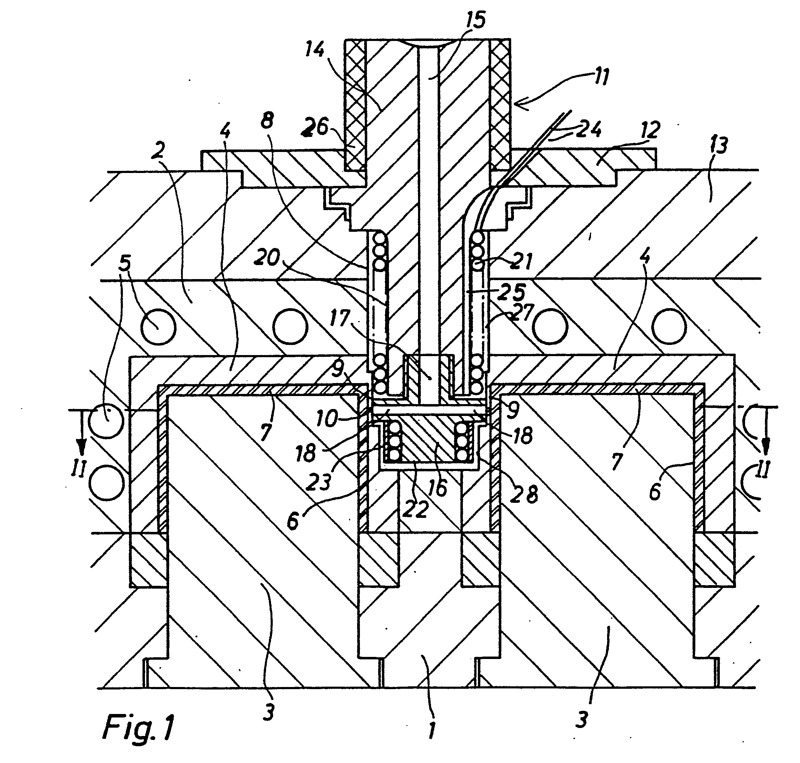

Ein Spritzgießwerkzeug nach Fig. 1 umfaßt zwei Formplatten 1 und 2, die jeweils einen Formkern 3 oder einen Formeinsatz 4 aufnehmen. Die Einzelheiten der Aufspannung der Formkerne, Formeinsätze und Formplatten sind in den Figuren nicht dargestellt. Innerhalb der Formplatte 2 sind auch Kanäle 5 für ein Kühlmittel angeordnet. Der Formeinsatz 4 begrenzt mit dem Formkern 3 jeweils eine Formkammer 6 für ein Formteil 7. Innerhalb der Formplatte 2 befindet sich eine Aufnahmekammer 8, die in dem dargestellten Ausführungsbeispiel einen zylindrischen Querschnitt hat. Diese Aufnahmekammer 8 reicht auch in die Formeinsätze 4 hinein, so daß im Bereich der Formkammern 6 nur eine sehr schmale Zwischenwand 9 mit einer Wandstärke von etwa 0,7 bis 1,5 mm zurückbleibt. Innerhalb dieser Zwischenwand 9 ist jeweils eine Einspritzöffnung 10 mit einem Querschnitt von etwa 1 bis 2 mm ausgebildet. Diese Einspritzöffnung 10 ist mit ihrer Achse senkrecht zu der betreffenden Wand des Formteils 7 ausgerichtet. Damit liegt die Achse der Einspritzöffnung 10 parallel zur Teilungsebene. Die Längsachse der Aufnahmekammer 8 verläuft senkrecht zur Teilungsebene.

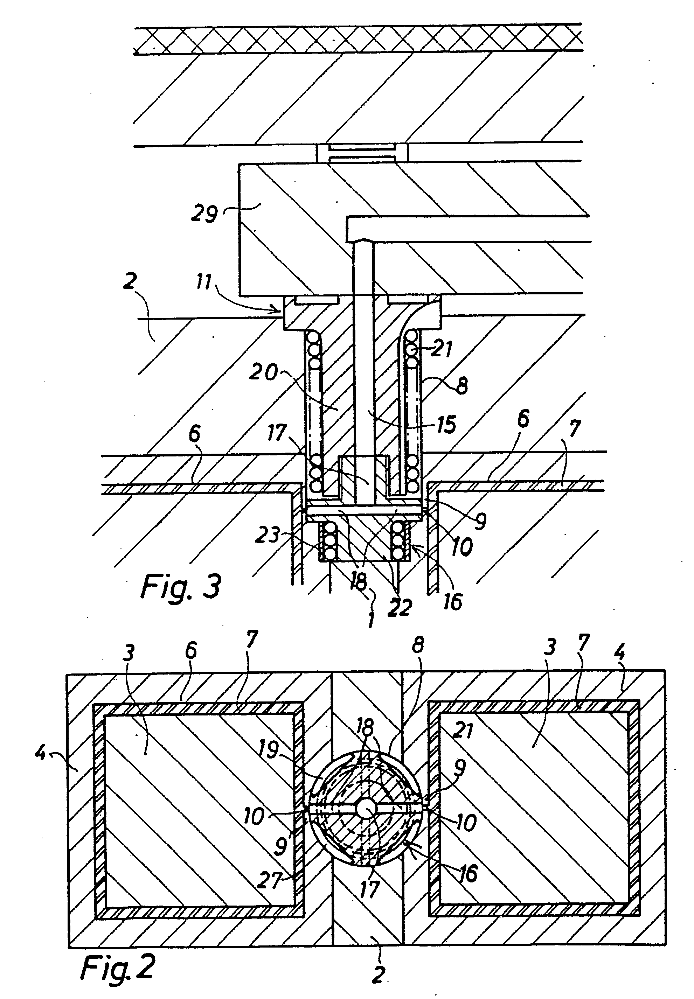

Eine Hochleistungsangießbuchse 11 ist innerhalb der Aufnahmekammer 8 angeordnet. Die Hochleistungsangießbuchse 11 ist mittels einer Trägerplatte 12 an einer Aufspannplatte 13 für die Formplatte 2 befestigt. Die Hochleistungsangießbuchse 11 umfaßt einen zylindrischen Teil 14 und einen anschließenden zylindrischen Abschnitt oder Schaft 20 mit einem Angießkanal 15. Am Stirnende des Schaftes 20 ist ein Düsenkopf 16 befestigt, der einen Anschlußkanal 17 in Ausrichtung auf den Angießkanal 15 sowie senkrecht daran anschließende Anspritzkanäle 18 aufweist. Die Anspritzkanäle 18 sind auf die Einspritzöffnungen 10 ausgerichtet. Die Mündungen der Anspritzkanäle 18 liegen dicht an den Einspritzöffnungen 10 an. Zwischen den Anspritzkanälen 18 sind am Umfang des Düsenkopfes 16 Ausnehmungen 19 vorgesehen, so daß dort gegenüber der Wandung der Aufnahmekammer 8 Spalte freibleiben. Gemäß Fig. 2 kann man innerhalb des Düsenkopfes 16 auch mehr als zwei Anspritzkanäle 18 vorsehen.

Auf den Schaft 20 und den ebenfalls zylindrischen Stirnteil 22 des Düsenkopfes 16 ist eine Wendelrohrpatrone 21 gewickelt, die durch eine der Ausnehmungen 19 gezogen ist. Im Bereich des Stirnteils 22 umschließt eine Hülse 23 die Wendelrohrpatrone. Elektrische Anschlußleitungen 24 der Wendelrohrpatrone 21 sind durch einen Kanal nach außen geführt. In Längsrichtung des Schaftes 20 kann man einen Kanal 25 zur Aufnahme eines Temperaturfühlers oder dergleichen vorsehen, um mit diesem Temperaturfühler die Temperatur des Düsenkopfes genau zu erfassen. Zur Beheizung des Fußteiles der Hochleistungsangießbuchse 11 ist ein Heizband 26 vorgesehen.

Die Fig. 1 und 2 zeigen die Hochleistungsangießbuchse im Einbauzustand in ein Spritzgießwerkzeug. Die Aufnahmekammer 8 ist in der vorstehend erläuterten Weise innerhalb der Aufspannplatte 13, der Formplatte 2 und des Formeinsatzes 4 angeordnet. Die Hochleistungsangießbuchse 11 wird mit der aufgewickelten Wendelrohrpatrone 21 in die Aufnahmekammer 8 eingeschoben. Gegenüber den Werkzeugplatten bleibt sowohl im Bereich des Schaftes 20 als auch im Stirnteil 22 des Düsenkopfes ein Spalt 27 bzw. 28 frei, damit der Wärmeübergang von der heißen Hochleistungsangießbuchse zu den gekühlten Werkzeugplatten möglichst gering ist. Lediglich im Mündungsbereich der Anspritzkanäle 18 erfolgt eine Anlage gegenüber den Mündungen der Einspritzöffnungen 10. Die Wendelrohrpatrone 21 ist fest auf den Schaft 20 sowie auf den Stirnteil 22 aufgewickelt und wird auf dem Stirnteil 22 zusätzlich durch die Hülse 23 festgehalten. Dadurch erreicht man eine vollständige und wirkungsvolle Beheizung der Hochleistungsangießbuchse über ihre gesamte Länge, so daß der Thermoplast im Bereich des Angießkanals 15, des Anschlußkanals 17 und der Anspritzkanäle 18 plastisch und fließfähig bleibt. Damit gewährleistet die Hochleistungsangießbuchse immer einen sauberen und einwandfreien Anspritzvorgang. Der Thermoplast wird durch die Einspritzöffnungen hindurch in die Formkammern eingespritzt. Bei der Trennung der Werkzeughälften wird der innerhalb der Einspritzöffnungen 10 steckende Angießstrang glatt abgeschert, so daß die Formteile 7 eine saubere Angießfläche haben. Angußreste können nicht zurückbleiben. Nach Ausformen der Formteile werden die Werkzeughälften in üblicher Weise wieder zusammengefahren. Der noch plastische Werkstoff innerhalb der Hochleistungsangießbuchse wird während des nächsten Arbeitstaktes in die Formkammer ausgepreßt.

Die Ausführungsform der Erfindung nach den Figuren 1 und 2 zeigt die Anwendung der Erfindung bei unmittelbarer Einspritzung des Werkstoffes in die Formkammern.

Fig. 3 zeigt die Anwendung der Erfindung bei Verwendung einer Verteilervorrichtung, z. B. in Form eines Heizbalkens 29. In diesem Fall sind auf den Heizbalken 29 Hochleistungsangießbuchsen 11 aufgesetzt, von denen eine in der Zeichnung dargestellt ist.

**Ansprüche**

1. Spritzgießwerkzeug mit einer Hochleistungsangießbuchse (11) für eine seitliche Anspritzung durch Tunnelanbindung an eine jede Formkammer (6), wobei die Hochleistungsangießbuchse (11) und die Mündungsflächen von Einspritzkanälen (18) senkrecht zur Teilungsebene des Werkzeugs ausgerichtet sind und wobei ein Schaft (20) der Hochleistungsangießbuchse (11) durch eine Wendelrohrpatrone (21) beheizt ist, gekennzeichnet durch folgende Merkmale:

a) am Stirnende der Angießbuchse (11) sitzt ein zylindrischer Düsenkopf (16) mit Anspritzkanälen (18), die parallel zur Teilungsebene verlaufen;

b) das Stirnende der Angießbuchse (11) sowie der Düsenkopf (16) sind mit einer Wendelrohrpatrone (21) bewickelt;

c) die mit der Wendelrohrpatrone bewickelte Angießbuchse liegt unter Freilassung eines Luftspaltes (27, 28) in einer Aufnahmekammer (8) des Werkzeugs;

d) der Düsenkopf (16) weist zwischen den Anspritzkanälen (18) am Umfang Ausnehmungen (19) auf, so daß Spalte innerhalb der Aufnahmekammer (8) freibleiben;

e) die Mündungen der Anspritzkanäle (18) liegen dicht an Einspritzöffnungen (10) der jeweiligen Formkammer (6) an.

2. Spritzgießwerkzeug nach Anspruch 1, dadurch gekennzeichnet, daß in Längsrichtung des Stirnendes der Angießbuchse ein Kanal (25) für einen Fühler insbesondere einen Temperaturfühler verläuft.

3. Spritzgießwerkzeug nach einem der Ansprüche 1 bis 2, dadurch gekennzeichnet, daß die Aufnahmekammer (8) für die Angießbuchse (4) möglichst nah an die Formkammer (6) heranreicht, so daß die Formkammer im Bereich der Einspritzöffnung (10) eine nur 0,7 bis 1,5 mm starke Zwischenwand (9) hat.

0 032 983

4. Spritzgießwerkzeug nach einem der Ansprüche 1 bis 3, dadurch gekennzeichnet, daß eine Hülse (23) die Wendelrohrpatrone (21) im Bereich des Düsenkopfes (16) umgibt.

## Claims

1. Injection mould with a high capacity sprue bushing (11) for a lateral spruing through tunnel gating to each mould chamber (6), the high capacity sprue bushing (11) and the outlet faces of the sprue runners (18) directed vertically to the parting plane of the mould and a shaft (20) of the high capacity sprue bushing (11) being heated by a helical tubular cartridge (21), characterized by the following features :
    a) on the front end of the sprue bushing (11) a cylindrical orifice head (16) is provided having sprue runners (18), directed parallel to the parting plane ;
    b) the front end of the sprue bushing (11) as well as the orifice head (16) are wound with a helical tubular heating cartridge (21) ;
    c) the sprue bushing, wound with the tubular heating cartridge, is situated, leaving an air gap (27, 28), in a receiving chamber (8) of the mould ;
    d) the orifice head (16) comprises recesses (19) between the sprue runners (18) on the periphery so that gaps are left within the receiving chamber (8) ;
    e) the outlets of the sprue runners (18) mate closely with injection openings (10) of the respective mould chamber (6).

2. Injection mould according to claim 1, characterized in that in the longitudinal direction of the front end of the sprue bushing a duct (25) extends for a sensing device especially a temperature sensing element.

3. Injection mould according to claim 1 or 2, characterized in that the receiving chamber (8) for the sprue bushing (4) extends as close as possible to the mould chamber (6) so that the mould chamber has merely a 0,7 to 1,5 mm thick partition wall (9) in the region of the injection opening (10).

4. Injection mould according to one of the claims 1 to 3, characterized in that a sleeve (23) surrounds the helical tubular heating cartridge (21) in the region of the orifice head (16).

## Revendications

1. Moule à injection avec buse de carotte à grand rendement (11) pour une injection latérale à travers une liaison en tunnel vers chaque chambre de moule (6), la buse de carotte à grand rendement (11) et les surfaces d'embouchure des canaux d'injection (18) étant dressées perpendiculairement à la surface du joint du moule et une tige (20) de la buse de carotte à grand rendement (11) étant chauffée par une cartouche tubulaire en spirale (21), caractérisé par les particularités suivantes :
    a) sur l'extrémité avant de la buse de carotte (11) se trouve une tête d'ajutage cylindrique (16) avec des canaux d'injection (18), qui s'étendent parallèlement à la surface de joint du moule ;
    b) l'extrémité avant de la buse de carotte (11) ainsi que la tête d'ajutage (16) sont entourées par une cartouche tubulaire en spirale (21) ;
    c) la buse de carotte entourée par la cartouche tubulaire en spirale se situe, en laissant libre un intervalle d'air (27, 28), dans une chambre réceptrice (8) du moule ;
    d) la tête d'ajutage (16) présente, entre les canaux d'injection (18), sur sa périphérie, des évidements (19), de telle sorte que des intervalles restent libres à l'intérieur de la chambre réceptrice (8) ;
    e) les embouchures des canaux d'injection (18) s'appliquent de façon étanche sur les ouvertures d'injection (10) de la chambre de moule concernée (6).

2. Moule à injection suivant la revendication 1, caractérisé en ce qu'un canal (25) pour un palpeur, en particulier un palpeur de température, s'étend dans la direction longitudinale de l'extrémité avant de la buse de carotte.

3. Moule à injection suivant l'une ou l'autre des revendications 1 et 2, caractérisé en ce que la chambre réceptrice (8) pour la buse de carotte (4) s'étend jusqu'aussi près que possible de la chambre de moule (6), de telle sorte que la chambre de moule ne possède au voisinage de l'ouverture d'injection (10) qu'une cloison intermédiaire (9) de 0,7 à 1,5 mm d'épaisseur.

4. Moule à injection suivant l'une quelconque des revendications 1 à 3, caractérisé en ce qu'une douille (23) entoure la cartouche tubulaire en spirale (21) au voisinage de la tête d'ajutage (16).

4

Fig.1

Fig. 3

Fig. 2